# EUROPÄISCHE PATENTSCHRIFT

(11) **EP 1 153 453 B1**
(45) Veröffentlichungstag und Bekanntmachung des Hinweises auf die Patenterteilung: **02.04.2003**
(21) Anmeldenummer: 00909106.7
(22) Anmeldetag: 26.01.2000
(51) Int. Cl.: H01M 8/06

(54) **VORRICHTUNG ZUM VERDAMPFEN UND/ODER ÜBERHITZEN EINES KOHLENWASSERSTOFFS**
DEVICE FOR EVAPORATING AND/OR OVERHEATING A HYDROCARBON
DISPOSITIF DE VAPORISATION ET/OU DE SURCHAUFFE D'UN HYDROCARBURE

(30) Priorität: 27.01.1999 DE 19903168
(43) Veröffentlichungstag der Anmeldung: 14.11.2001
(73) Patentinhaber: Ballard Power Systems AG, 73230 Kirchheim / Teck-Nabern (DE)
(72) Erfinder: BONEBERG, Stefan, D-72660 Beuren (DE); MOTZET, Bruno, D-73235 Weilheim/Teck (DE); TISCHLER, Alois, D-94501 Aidenbach (DE); WEISSER, Marc, D-73277 Owen/Teck (DE)
(74) Vertreter: Beyer, Andreas, Dr.
(86) Internationale Anmeldenummer: EP0000583
(87) Internationale Veröffentlichungsnummer: WO00045456

(56) Entgegenhaltungen:
- EP-A- 0 061 727
- EP-A- 0 729 196
- EP-A- 0 798 798
- EP-A- 0 951 087
- WO-A-99/16139
- DE-A- 19 740 657
- FR-A- 1 553 361
- GB-A- 2 242 562
- US-A- 4 670 359
- US-A- 5 741 474
- PATENT ABSTRACTS OF JAPAN vol. 018, no. 382 (E-1580), 19. Juli 1994 (1994-07-19) -& JP 06 111841 A (TOSHIBA CORP), 22. April 1994 (1994-04-22)
- PATENT ABSTRACTS OF JAPAN vol. 012, no. 258 (C-513), 20. Juli 1988 (1988-07-20) -& JP 63 044931 A (FUJI ELECTRIC CO LTD), 25. Februar 1988 (1988-02-25)

## Beschreibung

Die Erfindung betrifft eine Vorrichtung zum Verdampfen und/oder Überhitzen eines Kohlenwasserstoffs nach der im Oberbegriff von Anspruch 1 näher definierten Art.

Aus der gattungsgemäßen GB-A-2 242 562 ist es bekannt, zur Steigerung der thermischen Effizienz der Beheizung eines Methanol/Wasser-Gemischs vor einer Reformreaktion dieses durch zwei in einer Reihenschaltung zueinander angeordnete Wärmetauscher zu leiten. Diese Wärmetauscher werden durch die Abgase von jeweils einem katalytischen Brenner beheizt. Einer der Wärmetauscher wird dabei zusätzlich durch die Abgase, die aus dem vorgeschalteten Wärmetauscher ausströmen beheizt.

Aus der EP 0 184 814 B1 ist ein Brennstoffverdampfer bekannt, bei dem eine spiralförmig um einen zentralen Brennraum gewickelte Leitung für das zu verdampfende Medium vorgesehen ist. Diese die zu verdampfenden Flüssigkeiten enthaltende Spirale steht dabei in direktem Kontakt mit der Flamme des Brenners, wodurch es zu einer hohen thermischen Belastung der Bauteile des Verdampfers kommt.

In der DE 196 39 150 C2 ist eine zentrale Heizvorrichtung für ein Gaserzeugungssystem beschrieben. Dabei wird zur Bereitstellung von Wärmeenergie ein Brennmittel zusammen mit einem sauerstoffhaltigen Gas in einer Zentralkomponente katalytisch oxidiert. Die in der Zentralkomponente erzeugte Wärmeenergie wird über Wärmeträgermedien weiteren Systemkomponenten eines Gaserzeugungssystems zugeführt. Durch die dafür erforderliche Verteilung der thermischen Energie mittels eines Wärmeträgermediums auf die einzelnen Komponenten sind entsprechende Leitungselemente erforderlich, welche den zentralen Brenner wärmeträgermedienseitig mit den weiteren Komponenten verbinden. In diesen Bereichen können erhebliche Wärmeverluste auftreten, die den Gesamtwirkungsgrad der Anlage in nachteiliger Weise senken.

Aus der EP 0 729 196 A, der US 4,670,359, der EP 0 798 798 A sowie der FR-A-1 553 361 sind jeweils Systeme bekannt, bei denen ein Wärmetauscher zur Erwärmung oder Verdampfung eines Mediums jeweils von Abgasen beheizt wird, welche aus einem unmittelbar oder über entsprechende Zwischenelemente, wie Turbinen oder dergleichen, vor dem Wärmetauscher plazierten Brenner beheizt werden.

Es ist Aufgabe der Erfindung, eine Vorrichtung zum Verdampfen und/oder Überhitzen eines Kohlenwasserstoffs oder eines Kohlenwasserstoff/Wasser-Gemischs für ein Gaserzeugungssystem einer Brennstoffzellenanlage zu schaffen, bei der eine möglichst effiziente Beheizung des Gaserzeugungssystems erfolgt, die einen hohen thermischen Wirkungsgrad ermöglicht und die sehr schnell auf sich medienseitig verändernde Bedingungen, wie Lastwechsel oder dergleichen, zu reagieren vermag.

Erfindungsgemäß wird diese Aufgabe durch die im kennzeichnenden Teil von Anspruch 1 genannten Merkmale gelöst.

Durch eine Verbrennung läßt sich mit einem sehr hohen Wirkungsgrad thermische Energie erzeugen. Wird nun ein Abgas dieser Verbrennung, welches im allgemeinen den größten Teil der thermischen Energie der Verbrennung beinhaltet, durch den wärmeträgerseitigen Bereich zweier Wärmetauscher geleitet, so ist man in der Lage, in den Wärmetauschern thermische Energie mit einem sehr hohen Wirkungsgrad zur Verfügung zu stellen und den Wärmetaucher gleichzeitig vor einer zu hohen thermischen und vor einer chemischen Belastung des Wärmetauschermaterials durch die direkt an dem Material angreifenden Flammen einer Verbrennung zu schützen. Die erfindungsgemäße Vorrichtung ermöglicht es daher, einen Kohlenwasserstoff oder ein Kohlenwasserstoff/Wasser-Gemisch mit einem hohen Wirkungsgrad zu verdampfen.

Im Gegensatz zu Anlagen, welche sich eines Wärmeträgermediums bedienen, weist die erfindungsgemäße Vorrichtung ein sehr gutes dynamisches Ansprechverhalten auf, da sich die thermische Energie, welche in der Verbrennung erzeugt wird, sehr schnell an veränderte Anforderungen anpassen läßt. Dadurch, daß lediglich das Abgas der Verbrennung den Wärmetauscher durchströmt, werden zeitliche Verzögerungen, welche sich bisher durch den Wärmeübergang der thermischen Energie der Verbrennung auf ein Wärmeträgermedium, welches dann den Wärmetauscher durchströmt und durch den viel langsameren Transport der thermischen Energie durch das meist flüssige Wärmeträgermedium ergeben haben, vermieden.

Weitere Vorteile ergeben sich bei dem Aufbau des Wärmetauschers, welcher aufgrund seiner Durchströmung durch zwei Fluide vergleichsweise einfach aufgebaut werden kann. Aufgrund der gegenüber der direkten Beheizung mit einer Flamme oder einem katalytischen Brenner geringeren Materialbelastung, kann der Wärmetauscher dabei als einfacher, beispielsweise gelöteter Wärmetauscher bzw. Verdampfer, kostengünstig hergestellt werden.

Außerdem tritt in dem Wärmetauscher kein explosives Gasgemisch auf, da hier lediglich die Abgase einer bereits erfolgten Verbrennung durch den wärmeträgerseitigen Bereich des Wärmetauschers strömen. Der Wärmetauscher muß also nicht aus Sicherheitsgründen gegen diese bei einer Explosion gegebenenfalls auftretenden, sehr hohen Drücke ausgelegt werden, was eine weitere Vereinfachung bezüglich der Herstellung des Wärmetauschers ermöglicht, und was darüber hinaus einen Aufbau des Wärmetauschers mit sehr geringer Masse erlaubt. Durch die geringe Masse ergibt sich dann wiederum der Vorteil, daß der Wärmetauscher, aufgrund seiner kleineren Wärmekapazität, ein sehr schnelles dynamisches Ansprechen auf geänderte Lastanforderungen der Brennstoffzelle und damit veränderte Anforderungen bezüglich der Übertragung der thermischen Energie von dem Abgas auf den Kohlenwasserstoff bzw. das Kohlenwasserstoff/Wasser-Gemisch erlaubt.

Die erfindungsgemäße Vorrichtung bietet also die Vorteile eines hohen Wirkungsgrads, bei der gleichzeitig gegebenen Möglichkeit, sehr schnell auf veränderte Anforderungen, z.B. einer veränderten Leistungsanforderung an eine Brennstoffzelle der Brennstoffzellen-Anlage, reagieren zu können.

Durch die Ausgestaltung der beiden Wärmetauscher mit unterschiedlichen Massen und den damit verbundenen unterschiedlichen Wärmekapazitäten läßt sich in besonders vorteilhafter Weise eine verbesserte Dynamik der erfindungsgemäßen Vorrichtung erreichen. Diese verbesserte Dynamik ist dabei mit sehr guten Kaltstarteigenschaften der Anlage verbunden. Dies ergibt sich in erfindungsgemäßer Weise dadurch, daß die Masse und damit die Wärmekapazität des ersten Wärmetauschers gegenüber der Masse des zweiten Wärmetauschers deutlich kleiner ist. Damit läßt sich der erste Wärmetauscher besser und schneller erwärmen und weist damit ein besseres dynamisches Ansprechverhalten auf. Selbstverständlich kann der im allgemeinen als Verdampfer betriebene erste Wärmetauscher damit auch nur eine geringere Verdampfungsleistung übertragen, dies wird jedoch durch den Einsatz des zweiten Wärmetauschers kompensiert, so daß das Gesamtsystem weiterhin in der Lage ist, eine hohe geforderte Verdampfungsleistung bereitzustellen.

Vorteilhafte Ausgestaltungen und Weiterbildungen der Erfindung ergeben sich aus den Unteransprüchen und den nachfolgend anhand der Zeichnungen prinzipmäßig dargestellten Ausführungsbeispielen.

Es zeigt:
- Fig. 1: einen Aufbau der erfindungsgemäßen Vorrichtung in einer Prinzipdarstellung; und
- Fig. 2: einen möglichen weiteren Aufbau der erfindungsgemäßen Vorrichtung in einem Aufbau mit zwei Wärmetauschern und zwei Brennern.

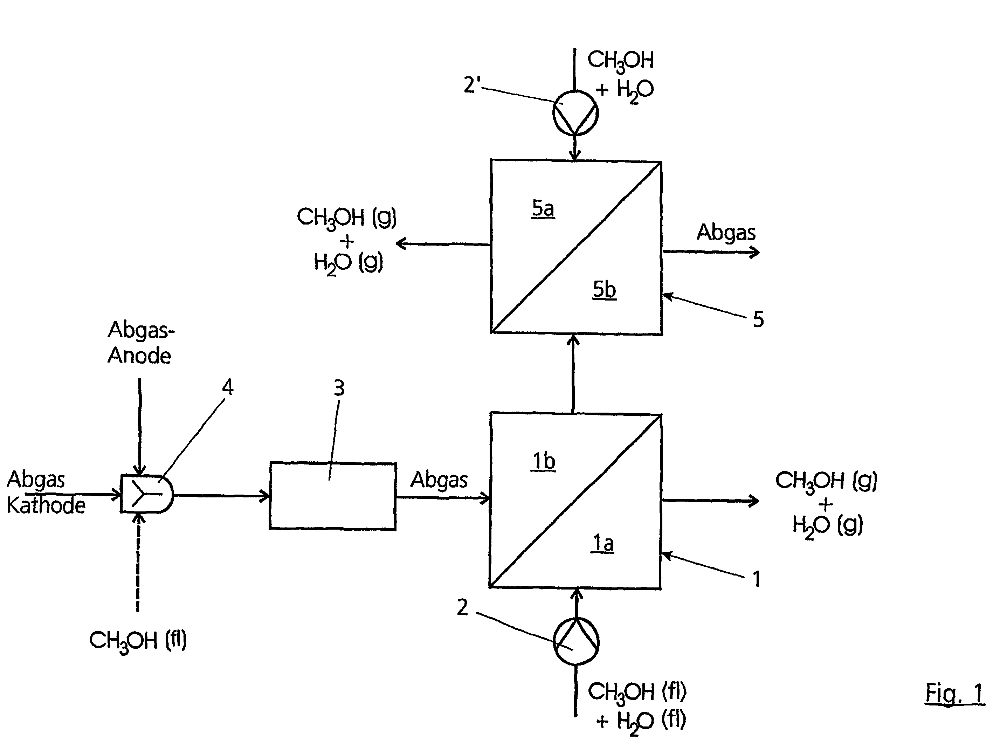

In Fig. 1 ist ein Grundaufbau der Vorrichtung zum Verdampfen und/oder Überhitzen eines Kohlenwasserstoffs oder eines Kohlenwasserstoff/Wasser-Gemischs dargestellt. Dabei wird ein Wärmetauscher 1 in seinem medienseitigen Bereich 1a von einem Kohlenwasserstoff bzw. einem Kohlenwasserstoff/Wasser-Gemisch durchströmt. Im hier dargestellten Ausführungsbeispiel soll es sich dabei insbesondere um ein Gemisch aus Methanol und Wasser (CH₃OH + H₂O) handeln. Das Methanol/Wasser-Gemisch wird über eine Dosiereinrichtung 2 in seiner flüssigen Form dem medienseitigen Bereich 1a des Wärmetauschers 1 zugeführt. Nachdem das Methanol/Wasser-Gemisch den medienseitigen Bereich 1a des Wärmetauschers 1 durchströmt hat, tritt es als erhitztes, verdampftes und/oder überhitztes Gemisch aus dem medienseitigen Bereich 1a des Wärmetauschers 1 aus. Das nun zumeist gasförmige Methanol/Wasser-Gemisch kann dann den nicht weiter dargestellten Komponenten eines Gaserzeugungssystems einer in ihrer Gesamtheit ebenfalls nicht dargestellten Brennstoffzellen-Anlage zugeführt werden.

Einen wärmeträgerseitigen Bereich 1b des Wärmetauschers 1 durchströmt gleichzeitig ein heißes Abgas einer in einem Brenner 3 stattfindenden Verbrennung. Das heiße Abgas und das Methanol/Wasser-Gemisch werden dabei im Gegenstrom durch den Wärmetauscher 1 geführt. Damit ergibt sich ein guter Wirkungsgrad des im Gegenstrombetrieb genutzten Wärmetauschers und eine sehr niedrige Temperatur des Abgases beim Verlassen des wärmeträgerseitigen Bereichs 1b des Wärmetauschers 1. Dieses Abgas kann dann praktisch ohne weitere Kühlung an die Umgebung abgegeben werden. Hierdurch können also weitere Komponenten, welche Druckverluste in dem Abgasstrom und erhöhte Kosten für die Brennstoffzellen-Anlage verursachen würden, eingespart werden. Durch die geringe Abgastemperatur nach dem Wärmetauscher 1 ergibt sich außerdem ein sehr guter Systemwirkungsgrad, da die in dem Abgas enthaltene thermische Energie zu ihrem wenigstens annähernd größten Teil in dem Wärmetauscher 1 genutzt worden ist.

Dem Brenner 3 werden Anoden- und Kathodenabgase der Brennstoffzelle zur Verbrennung zugeführt. In Fig. 1 ist dazu eine prinzipmäßig angedeutete Mischeinrichtung 4 in Strömungsrichtung vor dem Brenner 3 angedeutet. Die Mischeinrichtung 4 wird dabei mit den Abgasen des Anodenbereichs und des Kathodenbereichs der Brennstoffzelle versorgt. Das Kathodenabgas der Brennstoffzelle weist dabei einen vergleichsweise hohen Anteil an Restsauerstoff auf, so daß dieser zusammen mit den in dem Anodenabgas enthaltenen Resten an Wasserstoff, Methanol und gegebenenfalls Kohlenmonoxid in dem Brenner 3 verbrennen kann. Da die aus dem Anoden- bzw. Kathodenbereich der Brennstoffzelle stammenden Gase systembedingt ohnehin unter einem gewissen Druck stehen, sind keine weiteren Fördereinrichtungen zur Zufuhr der genannten Gase notwendig.

In der Startphase der Brennstoffzelle liefert die Brennstoffzelle noch keine ausreichende Menge an Abgasen. Da insbesondere der Kathodenbereich der Brennstoffzelle zu diesem Zeitpunkt jedoch bereits mit Luft beaufschlagt ist, gelangt so die noch annähernd unverbrauchte Luft als "Kathodenabgas" zu der Mischeinrichtung 4. Für diese Betriebszustände kann der Mischeinrichtung 4 optional noch ein weiteres Brennmittel, in bevorzugter Weise selbstverständlich der in der Anlage ohnehin vorhandene Kohlenwasserstoff, hier insbesondere Methanol (CH₃OH), zugeführt werden. Selbstverständlich ist diese optionale Zufuhr von Methanol auch dann möglich, wenn aufgrund bestimmter Lastbedingungen der Brennstoffzellen-Anlage, z.B. zu Beginn einer sprungartigen Leistungserhöhung, die in dem Anodenabgas vorliegenden brennbaren Reststoffe zur Erzeugung der erforderlichen thermischen Energie in dem Brenner 3 vorübergehend nicht ausreichen.

Aufgrund der möglichen hohen Temperatur in dem Brenner 3 werden sämtliche in den Abgasen vorliegenden Stoffe wenigstens annähernd vollständig verbrannt, so daß es gegenüber anderen Anlagentypen zu einer weitaus geringeren Emission an Schadstoffen kommt.

Der Brenner 3 ist in einer bevorzugten Ausführungsform als einfacher thermischer Brenner konstruiert, was einen hohen thermischen Wirkungsgrad ermöglicht und eine einfache und kostengünstige Herstellung im Vergleich zu einem katalytischen Brenner, welcher eine Beschichtung mit einem Katalysatormaterial erfordern würde, ermöglicht.

Das Abgas gelangt nun nach dem Durchströmen des Wärmetauschers 1 in einen wärmeträgerseitigen Bereich 5b eines zweiten Wärmetauschers 5. In dem Wärmetauscher 5 wird dabei in dessen medienseitigen Bereich 5a ebenfalls ein Gemisch aus Wasser und Methanol erwärmt, verdampft und/oder überhitzt, welches über eine Dosiereinrichtung 2' dem medienseitigen Bereich 5a des Wärmetauschers 5 zugeführt wird. Um für den Wärmetauscher 5 noch eine ausreichende Menge an thermischer Energie in dem Abgas zur Verfügung zu haben, wird im hier dargestellten Ausführungsbeispiel der Wärmetauscher 1 als Gleichstromwärmetauscher betrieben. Der Wärmetauscher 5 wird im Gegenstrom betrieben, wodurch eine sehr niedrige Temperatur des Abgases beim Verlassen des wärmeträgerseitigen Bereichs 5b des Wärmetauschers 5 sichergestellt ist. Damit ergibt sich insgesamt wieder ein hervorragender Wirkungsgrad, da die in den Abgasen vorliegende thermische Energie zu ihrem wenigstens annähernd größten Teil in den Wärmetauschern 1 und 5 zur Erwärmung, Verdampfung und/oder Überhitzung von Medien abgegeben wurde.

Insgesamt ergibt sich durch den in Fig. 1 dargestellten Aufbau eine vergleichsweise geringe Temperaturbelastung des Materials der beiden Wärmetauscher 1, 5 bei einer gleichzeitig verbesserten Dynamik. Dies wird insbesondere durch den Wärmetauscher 1 ermöglicht, welcher kurzzeitig mit sehr hohen Temperaturen, also einer sehr hohen Verdampferleistung, gefahren werden kann, da das Abgas die nach dem Wärmetauscher 1 in ihm verbleibende Resttemperatur in den Wärmetauscher 5 noch nutzbringend abgeben kann. Die verbesserte Dynamik, verbunden mit einem sehr guten Kaltstart-Verhalten der Anlage, ergibt sich in Fig. 1 auch dadurch, daß die Masse und damit die Wärmekapazität des Wärmetauschers 1 gegenüber der Masse des Wärmetauschers 5 deutlich kleiner ist. Damit läßt sich der Wärmetauscher 1 besser und schneller erwärmen und weist eine höhere Dynamik auf. Selbstverständlich kann der Verdampfer 1 damit auch nur eine geringere Verdampfungsleistung übertragen, dies wird jedoch durch den Einsatz des Wärmetauschers 5 kompensiert, so daß das Gesamtsystem weiterhin in der Lage ist, eine hohe geforderte Verdampfungsleistung bereitzustellen.

Prinzipiell wäre es auch möglich, bei dem Aufbau gemäß Fig. 1 auf die zweite Dosiereinrichtung 2' für den medienseitigen Bereich 5a des Wärmetauschers 5 zu verzichten und den Wärmetauscher 5 als zweite Stufe, beispielsweise zum Überhitzen des in dem Wärmetauscher 1 verdampften Mediums, einzusetzen.

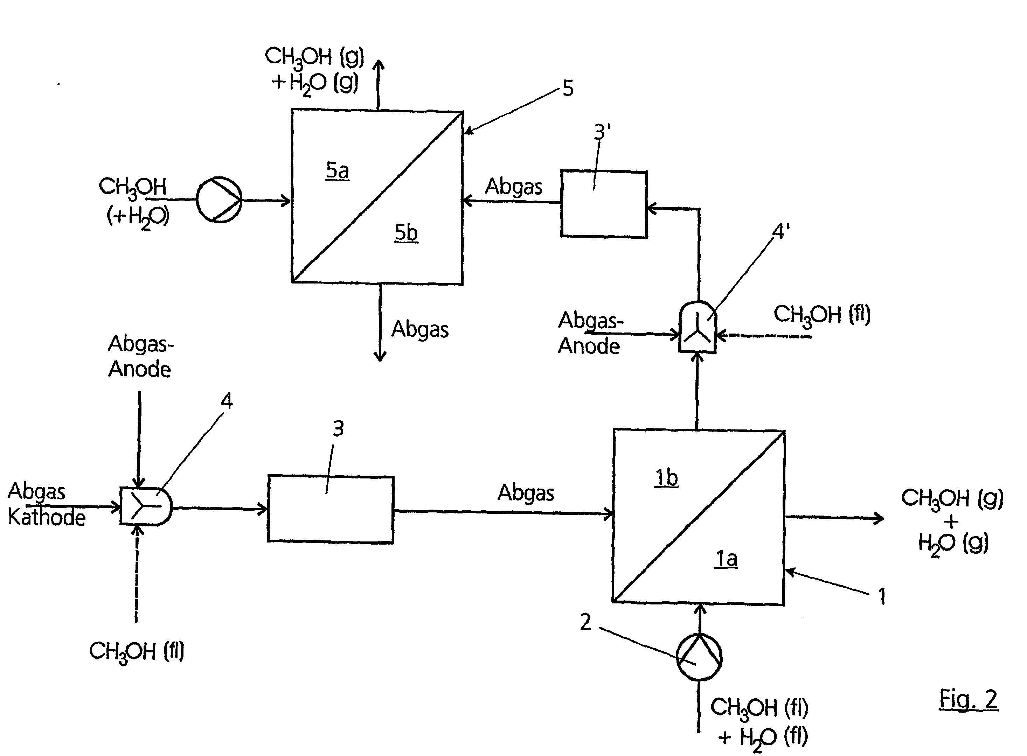

Fig. 2 zeigt nun eine Ausführung der Vorrichtung, welche in ihrem grundlegenden Prinzip dem oben bereits beschriebenen Aufbau vergleichbar ist.

Ein Wärmetauscher 1 mit seinem medienseitigen Bereich 1a und seinem wärmeträgerseitigen Bereich 1b funktioniert dabei in der oben bereits beschriebenen Funktionsweise. Hierbei ist es möglich, neben dem in Fig. 3 dargestellten Gleichstromprinzip den Wärmetauscher 1 auch im Gegenstrom zu betreiben. Den von dem Brenner 3 erzeugten Abgasen, welche den wärmeträgerseitigen Bereich 1b des Wärmetauschers 1 durchströmen, wird nach dem Wärmetauscher 1 in einer weiteren Mischeinrichtung 4' erneut Anodenabgas und gegebenenfalls Methanol zugeführt. Dieses Gemisch aus Anodenabgas und Abgas aus dem Brenner 3 gelangt dann in einen weiteren Brenner 3'. Die Abgase aus dieser in dem Brenner 3' stattfindenden Verbrennung, welche auch als eine Nachverbrennung angesehen werden kann, gelangen dann in den wärmeträgerseitigen Bereich 5b des zweiten Wärmetauschers 5. In dem medienseitigen Bereich 5a des zweiten Wärmetauschers 5 findet ein dem medienseitigen Bereich 1a des Wärmetauschers 1 vergleichbarer Vorgang statt. Durch den Einsatz von zwei Brennern 3, 3' in dem Gesamtsystem lassen sich wenigstens annähernd sämtliche brennbaren Reststoffe aus den Anoden- und Kathodenabgasen der Brennstoffzelle umsetzen, so daß sehr geringe Schadstoffemissionen entstehen und der Wirkungsgrad der Gesamtanlage durch die Ausnutzung der meisten in ihr enthaltenen energieliefernden Stoffe weiterhin erhöht wird.

Prinzipiell können beide Wärmetauscher 1, 5 im Gegenstrombetrieb genutzt werden, so daß auch hier die Wirkungsgrade der Wärmeübertragung sehr hoch werden. Um den Wirkungsgrad des Gesamtsystems zu verbessern, reicht es jedoch aus, den Wärmetauscher 5 im Gegenstrom zu betreiben, um die das System verlassenden Abgase auf eine möglichst geringe Temperatur abzukühlen. Beim Wärmetauscher 1 erhält man damit die Option, je nach gewünschter Wirkungsweise einen Gleichstrom- oder einen Gegenstrombetrieb zu nutzen.

Auch hier gilt wiederum das prinzipmäßig unter Fig. 1 bereits beschriebene, also der leichte und einfache Aufbau des Wärmetauschers 1 aus Gründen einer verbesserten Dynamik oder eines verbesserten Kaltstart-Verhaltens. Außerdem können die Wärmetauscher 1 und 5, wie im Ausführungsbeispiel dargestellt, unabhängig voneinander betrieben werden oder in einer nicht dargestellten Alternative als zweistufiger Wärmetauscher, wobei beispielsweise der Wärmetauscher 1 als Vorverdampfer, der Wärmetauscher 5 als Überhitzer, genutzt werden.

Eine zusätzliche Verbesserung des Wirkungsgrades kann bei der in Fig. 2 dargestellten Vorrichtung dadurch erreicht werden, daß in dem Wärmetauscher 1 ein Methanol/Wasser-Gemisch mit einem geringfügig höheren Wasseranteil verdampft wird, wohingegen in dem Wärmetauscher 5 reines Methanol verdampft wird. Werden die beiden aus den Wärmetauschern 1, 5 stammenden Medienströme danach gemischt, läßt sich hier das erforderliche Verhältnis von Wasser und Methanol erreichen. Aufgrund der geringeren Siedetemperatur von Methanol wird das den Wärmetauscher 5 verlassende Abgas jedoch ein geringeres Temperaturniveau aufweisen, als wenn in dem Wärmetauscher 5 ein Gemisch aus Methanol und Wasser verdampft werden würde. Dadurch ergibt sich eine weitere Steigerung des Systemwirkungsgrades, da die den wärmeträgerseitigen Bereich 5b des Wärmetauschers 5 verlassenden Abgase eine noch geringere Temperatur aufweisen, als sie dies tun würden, wenn in dem Wärmetauscher 5 ein Gemisch aus Wasser und Methanol verdampft worden wäre.

Selbstverständlich sind auch weitere Aufbauten denkbar, welche dann die Kombination einer beliebigen Anzahl an Wärmetauschern 1, 5 mit einer vergleichbaren oder kleineren Anzahl an Brennern 3, 3' aufweisen können.

## Patentansprüche

1. Vorrichtung zum Verdampfen und/oder Überhitzen eines Kohlenwasserstoffs oder eines Kohlenwasserstoff/Wasser-Gemischs für ein Gaserzeugungssystem einer Brennstoffzellenanlage, wobei der Kohlenwasserstoff oder das Kohlenwasserstoff/Wasser-Gemisch einen medienseitigen Bereich eines Wärmetauschers druchströmt, welcher eine wärmeleitende Verbindung zu einem wärmeträgerseitigen Bereich des Wärmetauschers aufweist, wobei in Strömungsrichtung vor dem wärmeträgerseitigen Bereich des Wärmetauschers ein Brenner angeordnet ist, wobei ein Abgas einer Verbrennung in dem Brenner den wärmeträgerseitigen Bereich des Wärmetauschers durchströmt, und wobei der Abgas-Volumenstrom nach dem Durchströmen des Wärmetauscher wenigstens einen zweiten, vergleichbar zu dem ersten Wärmetauscher arbeitenden Wärmetauscher durchströmt,
**dadurch gekennzeichnet, daß**
der wenigstens eine zweite Wärmetauscher (5) eine größere Masse als der erste Wärmetauscher (1) aufweist.

2. Vorrichtung nach Anspruch 1,
**dadurch gekennzeichnet, daß**
dem Brenner (3) Anoden- und Kathodenabgas der Brennsoffzellenanlage zur Verbrennung zuführbar sind.

3. Vorrichtung nach Anspruch 2,
**dadurch gekennzeichnet, daß**
dem Brenner (3) zusätzlich zu dem Anoden- und Kathodenabgas ein Brennstoff zur Verbrennung zuführbar ist.

4. Vorrichtung nach Anspruch 1, 2 oder 3,
**dadurch gekennzeichnet, daß**
in dem Brenner eine wenigstens annähernd vollständige Oxidation stattfindet.

5. Vorrichtung nach einem der Ansprüche 1 bis 4,
**dadurch gekennzeichnet, daß**
der Abgas-Volumenstrom und der Kohlenwasserstoff- oder der Kohlenwasserstoff/Wasser-Volumenstrom den Wärmetauscher (1) im Gegenstrom durchströmen.

6. Vorrichtung nach einem der Ansprüche 1 bis 5,
**dadurch gekennzeichnet, daß**
zwischen dem ersten Wärmetauscher (1) und dem wenigstens einen zweiten Wärmetauscher (5) jeweils ein weiterer Brenner (3') angeordnet ist, wobei dem Brenner (3') Anodenabgas der Brennstoffzelle und/oder Brennstoff zuführbar ist.

7. Vorrichtung nach einem der Ansprüche 3 bis 6,
**dadurch gekennzeichnet, daß**
als Brennstoff der Kohlenwasserstoff nutzbar ist.

8. Vorrichtung nach einem der Ansprüche 3 bis 7,
**dadurch gekennzeichnet, daß**
Methanol als Kohlenwasserstoff nutzbar ist.

## Claims

1. An apparatus for evaporating and/or superheating of a hydrocarbon or a hydrocarbon/water mixture for a gas generating system of a fuel cell system, wherein the hydrocarbon or the hydrocarbon/water mixture flows through a medium side area of a heat exchanger which comprises a heat conductive connection with a heat transfer medium side area of the heat exchanger, wherein a burner is arranged upstream of the heat transfer medium side area of the heat exchanger, wherein an off gas from a combustion in the burner flows through the heat transfer medium side area of the heat exchanger, and wherein the off gas volume flow after passing the heat exchanger flows through at least a second heat exchanger which operates similar to the first heat exchanger,
**characterised in that** the at least second heat exchanger (5) has a larger mass than the first heat exchanger (1).

2. The apparatus according to Claim 1,
**characterised in that** the burner (3) is adapted to be supplied with anode and cathode off gas of the fuel cell system for combustion.

3. The apparatus according to Claim 2,
**characterised in that** the burner (3) is adapted to be supplied with a fuel for combustion in addition to the anode and cathode off gas.

4. The apparatus according to Claim 1, 2, or 3,
**characterised in that** at least nearly complete oxidation occurs in the burner.

5. The apparatus according to one of Claims 1 to 4,
**characterised in that** the off gas volume flow and the hydrocarbon or the hydrocarbon/water volume flow pass the heat exchanger (1) in counter current flow.

6. The apparatus according to one of Claims 1 to 5,
**characterised in that** a further burner (3') each is arranged between the first heat exchanger (1) and the at least one second heat exchanger (5), wherein the burner (3') is adapted to be supplied with anode off gas of the fuel cell and/or fuel.

7. The apparatus according to one of Claims 3 to 6,
**characterised in that** the hydrocarbon can be utilised as the fuel.

8. The apparatus according to one of Claims 3 to 7,
**characterised in that** methanol can be utilised as the hydrocarbon.

## Revendications

1. Dispositif de vaporisation et/ou de surchauffe d'un hydrocarbure ou d'un mélange hydrocarbure/eau pour un système générateur de gaz d'une pile à combustible, l'hydrocarbure ou le mélange hydrocarbure/eau traversant une zone de circulation du fluide d'un échangeur thermique lequel présente une liaison thermoconductrice vers une zone d'entrée de l'énergie thermique de l'échangeur thermique, un brûleur étant placé dans le sens d'écoulement en amont de la zone d'entrée de l'énergie thermique dudit échangeur, un gaz d'évacuation résultant d'une combustion opérée à l'intérieur du brûleur traversant la zone d'entrée de l'énergie thermique de l'échangeur thermique, et le flux volumique du gaz d'évacuation traversant après son passage à travers l'échangeur thermique au moins un deuxième échangeur thermique fonctionnant de manière analogue au premier échangeur thermique,
**caractérisé en ce que** pour le moins le deuxième échangeur thermique (5) affiche une masse plus importante que le premier échangeur thermique (1).

2. Dispositif selon la revendication 1,
**caractérisé en ce que** le brûleur (3) peut, pour la combustion, être alimenté en gaz d'évacuation d'anode et de cathode de la pile à combustible.

3. Dispositif selon la revendication 2,
**caractérisé en ce que** le brûleur (3) peut, outre en gaz d'évacuation d'anode et de cathode, être alimenté également en combustible pour la combustion.

4. Dispositif selon la revendication 1, 2 ou 3,
**caractérisé en ce qu'**une oxydation pour le moins quasi totale peut avoir lieu à l'intérieur du brûleur.

5. Disposition selon l'une des revendications 1 à 4,
**caractérisé en ce que** le flux volumique du gaz d'évacuation et le flux volumique d'hydrocarbure ou d'hydrocarbure/eau traversent à contre-courant l'échangeur thermique (1).

6. Dispositif selon l'une des revendications 1 à 5,
**caractérisé en ce qu'**un autre brûleur (3') est placé entre le premier échangeur thermique (1) et pour le moins le deuxième échangeur thermique (5), le brûleur (3') pouvant être alimenté en gaz d'évacuation d'anode de la pile à combustible et/ou en combustible.

7. Dispositif selon l'une des revendications 3 à 6,
**caractérisé en ce qu'**il est possible d'utiliser un hydrocarbure comme combustible.

8. Dispositif selon l'une des revendications 3 à 7,
**caractérisé en ce qu'**il est possible d'utiliser du méthanol comme hydrocarbure.
